# FASCICULE DE BREVET EUROPEEN

(11) **EP 1 220 170 B1**
(45) Date de publication et mention de la délivrance du brevet: **23.11.2005**
(21) Numéro de dépôt: 00870310.0
(22) Date de dépôt: 20.12.2000
(51) Int. Cl.: G07F 7/08

(54) **Procédé et dispositif d'acquisition d'un document électronique**
Verfahren und Vorrichtung zum Erwerb eines elektronischen Dokumentes
Method and device for the acquisition of an electronic document

(43) Date de publication de la demande: 03.07.2002
(73) Titulaire: PROTON WORLD INTERNATIONAL en abrégé PWI, 1130 Bruxelles (Haren) (BE)
(72) Inventeur: Ingels, Didier, 1367 Grand-Rosiere (BE); Restiau, Guy, 1330 Rixensart (BE)
(74) Mandataire: Quintelier, Claude

(56) Documents cités:
- EP-A- 0 628 928
- EP-A- 0 713 198
- FR-A- 2 642 202

## Description

La présente invention concerne un procédé d'acquisition d'un document électronique au moyen, d'une part, d'une carte à puce à mémoire et à fonction de moyen de paiement électronique et, d'autre part, d'un terminal de vente dudit document. La fonction de moyen de paiement électronique peut être du type porte-monnaie électronique ou notamment d'une carte de débit/crédit.

La carte à puce trouve de plus en plus d'utilisations dans la vie courante. Il en résulte qu'un même individu peut être en possession de plusieurs cartes de ce genre. Pour éviter l'inconvénient résultant d'une telle multiplication de cartes à emporter, à gérer et manipuler, on en est venu à agencer certaines de ces cartes pour qu'elles puissent servir à plusieurs fonctions. Un cas typique est celui de la carte à puce comportant une fonction de porte-monnaie électronique et au moins une fonction d'acquisition d'un ou de documents électroniques tels qu'un ou des tickets de transport en commun, ou de parking, ou d'accès à un spectacle (voir FR-A-2642202).

Lorsque la même carte à puce sert à ces deux fonctions de moyen de paiement et d'acquisition, celles-ci doivent y être implantées de façon à ce qu'elles soient totalement indépendantes l'une de l'autre et donc sans aucune possibilité d'influence et d'interférence réciproque. Mais il faut surtout une certitude absolue qu'à de l'argent débité par exemple du porte-monnaie électronique corresponde un document acquis et vice versa. Si un dérangement de fonctionnement intervient pendant l'opération d'acquisition, on ne peut pas se trouver dans une situation dans laquelle de l'argent a été prélevé du porte-monnaie électronique alors que le document n'a pas été produit et/ou mémorisé de manière valable et valide dans la carte ou, inversement, dans laquelle le document a été produit/ validé mais l'argent n'a pas été prélevé.

La présente invention a pour but de remédier à ce genre d'inconvénient et de procurer un procédé qui apporte une certitude que, si l'argent a été prélevé, le document est acquis et réciproquement.

A cet effet, suivant l'invention, le procédé comporte une introduction préalable dans ladite mémoire d'un document dans un état non validé, à acquérir par validation, ainsi que d'une fonction d'acquisition du document, indépendante de la fonction de porte-monnaie. Lorsqu'on veut acquérir un tel document, on met en communication le terminal de vente et les fonctions indépendantes d'acquisition et de moyen de paiement électronique de la carte. On passe un ordre d'acquisition du document, transmis par l'intermédiaire du terminal à la fonction d'acquisition. On organise une vérification d'une présence dans la carte du document à valider et de son authenticité et une vérification d'une présence et de l'authenticité d'un montant, dans le porte-monnaie, pour l'acquisition du document. Si les deux étapes de vérification sont positives, on organise un envoi simultané d'un signal d'accord global à chacune des fonctions pour simultanément, d'une part, valider le document en tant que document acquis et, d'autre part, débiter le porte-monnaie du montant de l'acquisition.

Dans la présente invention, "acquérir" doit être compris aussi dans le sens d'obtenir un document donnant certains droits qu'usuellement on achète soit directement soit indirectement, comme dans le cas d'un abonnement à des services payés à l'avance.

Suivant une forme de réalisation, le procédé de l'invention comprend, par la mise en communication avec le terminal, une mise à jour soit du document soit d'une copie de celui-ci après l'étape positive de vérification de la présence et de l'authenticité du document, et ensuite un stockage temporaire du document ou copie mis à jour. Pour la validation dudit document ou copie mis à jour, à la réception du signal d'accord global, il est effectué une écriture, dans un emplacement réservé dans la fonction d'acquisition, de ce document ou de sa copie mis à jour, simultanément à une écriture du montant débité dans un emplacement réservé de la fonction de porte-monnaie.

L'invention a également pour objet un dispositif d'acquisition d'un document électronique, comportant une carte à puce à mémoire et à fonction de porte-monnaie électronique, et un terminal de vente dudit document.

Dans le dispositif suivant l'invention, la carte à puce comporte de plus une fonction d'acquisition indépendante de la fonction de porte-monnaie, et une mémoire pour y stocker un document à l'état non validé. Le terminal comporte des moyens de communication avec ladite carte, adaptés pour transmettre à la carte un ordre d'acquisition du document. Le dispositif comporte de plus un moyen de vérification d'une présence dans la carte du document à valider et de son authenticité, ce moyen étant agencé pour produire un premier signal d'accord, et un moyen de vérification d'une présence et de l'authenticité d'un montant suffisant dans le porte-monnaie pour l'acquisition du document, ce moyen étant agencé pour produire un second signal d'accord. En outre, il est prévu un moyen de combinaison des premier et second signaux d'accord, agencé et relié pour délivrer simultanément, à la fonction de porte-monnaie, un signal d'accord global de débit d'un montant d'acquisition du document et, à la fonction d'acquisition, le même signal d'accord global de validation du document acquis.

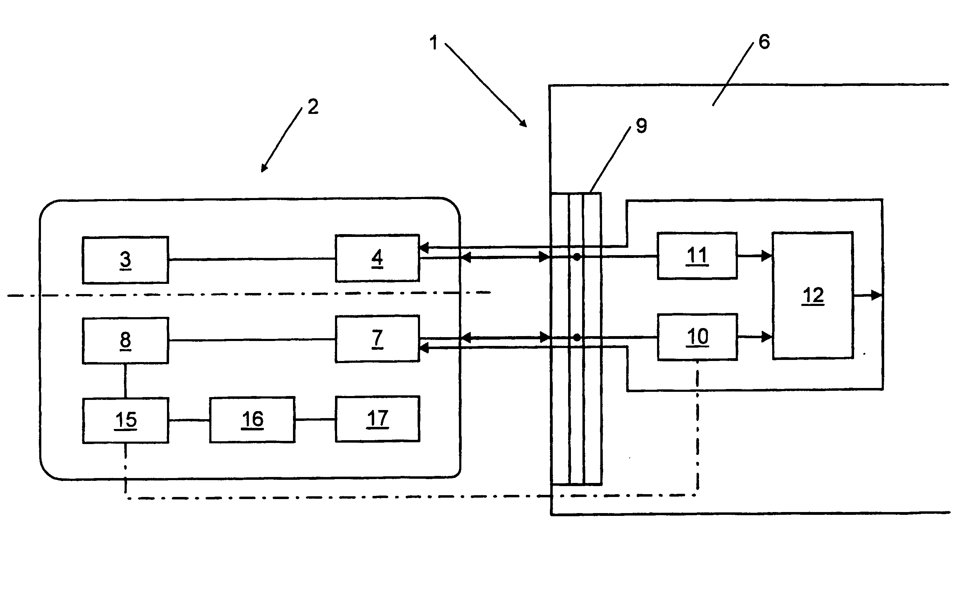

D'autres détails et particularités de l'invention ressortiront des revendications secondaires et de la description du dessin qui est annexé au présent mémoire et qui illustre, à titre d'exemple non limitatif, le procédé et des formes de réalisation particulières du dispositif suivant l'invention.

La figure unique montre schématiquement un dispositif de l'invention équipé pour réaliser les deux fonctions indépendantes citées à titre d'exemple.

Le dispositif 1 de l'invention, destiné à l'acquisition d'un document électronique, comporte divers éléments connus tels qu'une carte à puce 2 à mémoire 3 et à fonction de porte-monnaie électronique 4 et un terminal de vente 6 dudit document.

Suivant l'invention, la carte à puce 2 est équipée de plus d'au moins une fonction d'acquisition 7, indépendante de la fonction de porte-monnaie 4, et d'une autre mémoire 8 agencée pour y stocker, à l'état non validé, un document à acquérir. Le terminal 6 comporte de son côté des moyens 9 connus de communication avec ladite carte 2, adaptés pour qu'un individu puisse transmettre à celle-ci entre autre un ordre d'acquisition et un ordre de paiement du document.

Le dispositif 1 de l'invention comporte encore divers moyens, dont les suivants, connus en soi de l'homme de métier et reliés fonctionnellement entre eux. Un moyen 10 est agencé pour la vérification d'une présence, dans la carte 2, du document à valider et de l'authenticité de celui-ci et pour produire un premier signal d'accord si la carte 2 est en règle à cet égard. Un moyen 11 est destiné à la vérification d'une présence et de l'authenticité d'un montant suffisant, dans le porte-monnaie 4, pour l'acquisition du document et est agencé pour produire un second signal d'accord si la carte 2 est en règle à cet égard. Un moyen 12 pourvoit à la combinaison des premier et second signaux d'accord et est agencé et relié pour délivrer simultanément après réception de ces deux signaux, à la fonction de porte-monnaie 4, un signal d'accord global de débit d'un montant d'acquisition du document et, à la fonction d'acquisition 7, le même signal d'accord global de validation du document acquis.

Le dispositif 1 peut encore comporter, reliés au moyen de vérification 10 du document, un moyen 15 de mise à jour soit du document mémorisé dans la mémoire 8, soit d'une copie de celui-ci, à la réception du premier signal d'accord, une mémoire 16 de stockage temporaire du document, ou de sa copie, mis à jour, et un emplacement ou mémoire 17 réservé pour stocker le document, ou la copie, mis à jour, seulement après sa validation par la réception du signal d'accord global.

Le procédé suivant l'invention, qui peut être mis en oeuvre au moyen du dispositif 1 ci-dessus, comporte essentiellement les étapes ci-après.

Lors de la préparation de la carte 2, on introduit préalablement dans une mémoire 8 de celle-ci, dans un état non validé, un document, tel qu'un ticket de transport, à acquérir par validation, ainsi qu'une fonction d'acquisition 7 du document, indépendante de la fonction de porte-monnaie 4.

Pour acquérir ce ticket, le détenteur de la carte 2 met en communication de manière connue le terminal de vente 6 adéquat et les fonctions indépendantes d'acquisition 7 et de porte-monnaie 4 de la carte 2.

Le détenteur donne à la fonction d'acquisition 7, par l'intermédiaire du terminal 6, un ordre d'acquisition du document.

Le dispositif 1 effectue, par les moyens 10 et respectivement 11, une vérification d'une présence dans la carte 2 du document à valider et de son authenticité ainsi qu'une vérification d'une présence et de l'authenticité d'un montant, dans le porte-monnaie 4, suffisant pour l'acquisition du document.

Si les deux vérifications sont positives, les deux signaux d'accord qui en résultent donnent lieu à un envoi simultané, par le moyen de combinaison 12, d'un signal d'accord global à chacune des fonctions 4 et 7 pour simultanément, d'une part, valider le document en tant que document acquis et, d'autre part, débiter le porte-monnaie 4 du montant de l'acquisition.

Dans un mode de réalisation de l'invention, lors de la mise en communication de la carte 2 et du terminal 6, une vérification positive de la présence et de l'authenticité du document provoque une mise à jour soit du document soit d'une copie de celui-ci ainsi qu'un stockage temporaire, par exemple dans la mémoire 16, du document ou copie mis à jour.

Pour la validation proprement dite dudit document ou copie mis à jour, le dispositif 1 effectue, à la réception du signal d'accord global, une écriture, dans un emplacement 17 réservé de la fonction d'acquisition 7, de ce document ou de sa copie mis à jour, simultanément à une écriture du montant débité dans un emplacement réservé de la fonction de porte-monnaie 4.

Ainsi, le procédé peut comporter de plus un enregistrement dans le terminal 6 d'une preuve du débit dudit montant de l'acquisition.

Les diverses mémoires nécessaires dans la carte 2 peuvent n'être qu'une seule mémoire 3 divisée en mémoires partielles indépendantes l'une de l'autre, ou bien reliées, suivant les besoins.

La répartition des éléments et moyens cités ci-dessus, entre la carte 2 et le terminal 6, peut être différente de celle proposée, sans sortir du cadre des revendications.

Plusieurs fonctions d'acquisition indépendantes l'une de l'autre, peuvent être implantées dans une même carte 2 et être exploitées à l'aide d'un terminal 6 apte à activer ces fonctions ou de terminaux 6 distincts pour chaque fonction.

### Légende des figures

1 dispositif de l'invention 2 carte à puce 3 mémoire de 2 4 (fonction de) porte-monnaie électronique 6 terminal de vente 7 fonction d'acquisition 8 autre mémoire 9 moyens de communication 10 moyen de vérification de présence d'un document 11 moyen de vérification de présence d'un montant 12 moyen de combinaison de deux signaux 15 moyen de mise à jour 16 mémoire de stockage temporaire 17 emplacement ou mémoire de document validé

## Revendications

1. Procédé d'acquisition d'un document électronique au moyen, d'une part, d'une carte à puce (2) à mémoire (3) et à fonction de moyen de paiement électronique (4) et, d'autre part, d'un terminal (6) de vente dudit document, le procédé étant
***caractérisé en ce qu*****'**il comporte:
(a) une introduction préalable dans ladite mémoire (3) d'un document dans un état non validé, à acquérir par validation, ainsi que d'une fonction d'acquisition (7) du document, indépendante de la fonction de porte-monnaie (4),
(b) une mise en communication du terminal de vente (6) et des fonctions indépendantes d'acquisition (7) et de porte-monnaie (4) de la carte (2),
(c) un ordre d'acquisition du document, transmis par l'intermédiaire du terminal (6) à la fonction d'acquisition (7),
(d) une vérification d'une présence dans la carte (2) du document à valider et de son authenticité,
(e) une vérification d'une présence et de l'authenticité d'un montant, dans le porte-monnaie (4), pour l'acquisition du document,
(f) si les étapes (d) et (e) sont positives, un envoi simultané d'un signal d'accord global à chacune des fonctions (4, 7) pour simultanément, d'une part, valider le document en tant que document acquis et, d'autre part, débiter le porte-monnaie (4) du montant de l'acquisition.

2. Procédé suivant la revendication 1, **caractérisé en ce qu'**il comprend :
- par la mise en communication avec le terminal (6), une mise à jour soit du document soit d'une copie de celui-ci après l'étape (d) positive de vérification de la présence et de l'authenticité du document,
- un stockage temporaire (en 16) du document ou copie mis à jour, et
- pour la validation dudit document mis à jour, à la réception du signal d'accord global, une écriture, dans un emplacement (17) réservé de la fonction d'acquisition (6), de ce document ou de sa copie mis à jour, simultanément à une écriture du montant débité dans un emplacement réservé de la fonction de porte-monnaie (4).

3. Procédé suivant l'une ou l'autre des revendications 1 et 2, **caractérisé en ce qu'**il comporte de plus un enregistrement dans le terminal d'une preuve du débit dudit montant de l'acquisition.

4. Dispositif d'acquisition d'un document électronique, comportant :
- une carte à puce (2) à mémoire (3) et à fonction de moyen de paiement électronique (4) et
- un terminal (6) de vente dudit document,
***caractérisé en ce que***
- la carte à puce (2) comporte de plus une fonction d'acquisition (7) indépendante de la fonction de porte-monnaie (4), et une mémoire (3, 8) pour y stocker un document à l'état non validé,
- le terminal comporte des moyens (9) de communication avec ladite carte (2), adaptés pour transmettre à la carte (2) un ordre d'acquisition du document,
- le dispositif (1) comporte :
- un moyen (10) de vérification d'une présence dans la carte (2) du document à valider et de son authenticité, agencé pour produire un premier signal d'accord,
- un moyen (11) de vérification d'une présence et de l'authenticité d'un montant suffisant dans le porte-monnaie (4) pour l'acquisition du document, agencé pour produire un second signal d'accord, et
- un moyen (12) de combinaison des premier et second signaux d'accord, agencé et relié pour délivrer simultanément
- à la fonction de porte-monnaie (4) un signal d'accord global de débit d'un montant d'acquisition du document et
- à la fonction d'acquisition (7) un signal d'accord global de validation du document acquis.

5. Dispositif suivant la revendication 4, **caractérisé en ce qu'**il comporte,
- relié au moyen (10) de vérification du document, un moyen de mise à jour (15) soit du document soit d'une copie de celui-ci à la réception du premier signal d'accord,
- une mémoire (16) de stockage temporaire du document mis à jour, et
- un emplacement (17) réservé pour le document mis à jour, après sa validation par la réception du signal d'accord global.

## Patentansprüche

1. Verfahren zum Erwerb eines elektronischen Dokuments mit Hilfe, auf der einen Seite, einer Chipkarte (2) mit einem Speicher (3) und mit einer Funktion als Mittel zu elektronischen Bezahlung (4), und auf der anderen Seite, eines Terminals (6) zum Verkauf des genannten Dokuments, wobei das Verfahren **dadurch gekennzeichnet ist, daß** es umfaßt:
a) eine vorherige Einführung in den genannten Speicher (3) eines Dokuments in einem nicht validierten Zustand, welches durch Validierung zu erwerben ist, und auch einer Funktion zum Erwerb (7) des Dokuments, unabhängig von der Funktion des Portemonnaies (4),
b) ein Setzen in Kommunikation des Terminals zum Verkauf (6) und der unabhängigen Funktionen des Erwerbs (7) und des Portemonnaies (4) der Karte (2),
c) einen Befehl zum Erwerb des Dokuments, der unter Vermittlung des Terminals (6) zu der Funktion zum Erwerb (7) übertragen wird,
d) eine Überprüfung eines Vorhandenseins, in der Karte (2), des zu validierenden Dokuments und von dessen Echtheit,
e) eine Überprüfung eines Vorhandenseins und der Echtheit eines Betrags, in dem Portemonnaie (4), für den Erwerb des Dokuments,
f) wenn die Schritte (d) und (e) positiv sind, eine gleichzeitige Aussendung eines Signals der globalen Übereinstimmung mit jeder der Funktionen (4, 7), um gleichzeitig auf der einen Seite das Dokument als erworbenes Dokument zu validieren und auf der anderen Seite aus dem Portemonnaie (4) den Betrag des Erwerbs zu entnehmen.

2. Verfahren nach Anspruch 1, **dadurch gekennzeichnet, daß** es umfaßt:
- über das Setzen in Kommunikation mit dem Terminal (6), eine Aktualisierung entweder des Dokuments oder einer Kopie davon, nach dem positiven Schritt (d) der Überprüfung des Vorhandenseins und der Echtheit des Dokuments,
- eine zeitweilige Speicherung (in 16) des aktualisierten Dokuments oder der aktualisierten Kopie, und
- für die Validierung des genannten aktualisierten Dokuments, beim Empfang des Signals der globalen Übereinstimmung, ein Schreiben, in einen reservierten Bereich (17) der Funktion des Erwerbs (6), dieses aktualisierten Dokuments oder seiner aktualisierten Kopie, gleichzeitig mit einem Schreiben des entnommenen Betrags in einen reservierten Bereich der Funktion des Portemonnaies (4).

3. Verfahren nach einem der Ansprüche 1 oder 2, **dadurch gekennzeichnet, daß** es weiterhin eine Speicherung, in dem Terminal, eines Belegs für den genannten Betrag des Erwerbs umfaßt.

4. Vorrichtung zum Erwerb eines elektronischen Dokuments, umfassend:
- eine Chipkarte (2) mit einem Speicher (3) und einer Funktion zur elektronischen Bezahlung (4), und
- ein Terminal (6) zum Verkauf des genannten Dokuments,
**dadurch gekennzeichnet, daß**
- die Chipkarte (2) weiterhin eine Funktion zum Erwerb (7) unabhängig von der Funktion als Portemonnaie (4) aufweist, und einen Speicher (3, 8), um darin ein Dokument in einem nicht validierten Zustand zu speichern,
- das Terminal Mittel (9) zur Kommunikation mit der genannten Karte (2) aufweist, die angepaßt sind, um zu der Karte (2) einen Befehl zum Erwerb des Dokuments zu übertragen,
- wobei die Vorrichtung (1) umfaßt:
- ein Mittel (10) zur Überprüfung eines Vorhandenseins, in der Karte (2), des zu validierenden Dokuments und von dessen Echtheit, welches dazu eingerichtet ist, um ein erstes Signal der Übereinstimmung zu erzeugen,
- ein Mittel (11) zur Überprüfung eines Vorhandenseins und der Echtheit eines Betrags in dem Portemonnaie (4), der für den Erwerb des Dokuments ausreicht, welches dafür eingerichtet ist, um ein zweites Signal der Übereinstimmung zu überzeugen, und
- ein Mittel (12) zur Kombinierung des ersten und zweiten Signals der Übereinstimmung, welches eingerichtet und angeschlossen ist, um gleichzeitig abzugeben
- an die Funktion des Portemonnaies (4), ein Signal der globalen Übereinstimmung der Abgabe eines Betrags zum Erwerb des Dokuments, und
- an die Funktion des Erwerbs (7), ein Signal der globalen Übereinstimmung der Validierung des erworbenen Dokuments.

5. Vorrichtung nach Anspruch 4, **dadurch gekennzeichnet, daß** sie umfaßt
- verbunden mit dem Mittel (10) zur Überprüfung des Dokuments, ein Mittel zur Aktualisierung (15) entweder des Dokuments oder einer Kopie davon, beim Empfang des ersten Signals der Übereinstimmung,
- einen Speicher (16) zur zeitweiligen Speicherung des aktualisierten Dokuments, und
- einen reservierten Bereich (17) für das aktualisierte Dokument, nach dessen Validierung durch den Empfang des Signals der globalen Übereinstimmung.

## Claims

1. A method of acquiring an electronic document by means, on the one hand, of a smart card (2) with memory (3) and with electronic payment means function (4) and, on the other hand, a sales terminal (6) for the document, the method being **characterised in that** it comprises:
(a) a prior introduction into said memory (3) of a document in a non-validated state, to be acquired by validation, as well as a function (7) of acquiring the document, independent of the purse function (4);
(b) a putting in communication of the sales terminal (6) and independent acquisition (7) and purse (4) functions of the card (2);
(c) an order to acquire the document, transmitted by means of the terminal (6) to the acquisition function (7);
(d) a verification of the presence in the card (2) of the document to be validated and of its authenticity;
(e) a verification of the presence and authenticity of an amount, in the purse (4), for acquiring the document; and
(f) if steps (d) and (e) are positive, a simultaneous sending of a global agreement signal to each of the functions (4, 7) in order to simultaneously, on the one hand, validate the document as an acquired document and, on the other hand, debit the purse (4) by the amount of the acquisition.

2. The method according to claim 1, **characterised in that** it comprises:
by the putting in communication with the terminal (6), an updating either of the document or of a copy thereof after the positive step (d) of verifying the presence and authenticity of the document;
a temporary storage (in 16) of the document or updated copy; and
for the validation of the updated document, on reception of the global agreement signal, a writing, in a reserved location (17) of the acquisition function (6), of this document or the updated copy thereof, simultaneously with a writing of the debited amount in a reserved location of the purse function.

3. The method according to any one of claim 1 and 2, **characterised in that** it also comprises a recording in the terminal of evidence of the debiting of said acquisition amount.

4. A device for acquiring an electronic document, comprising:
a smart card (2) with memory (3) and with electronic payment means function (4); and
a sales terminal (6) for the document;
**characterised in that**:
the smart card (2) also comprises an acquisition function (7) independent of the purse function (4), and a memory (3, 8) for storing therein a document in the non-validated state;
the terminal comprises means (9) for communicating with the card (2), adapted to transmit to the card (2) an order to acquire the document;
the device (1) comprises :
a means (10) for verifying the presence in the card (2) of the document to be validated and its authenticity, provided to produce a first agreement signal;
a means (11) for verifying a presence and the authenticity of a sufficient amount in the purse (4) for acquiring the document, provided to produce a second agreement signal; and
a means (12) of combining the first and second agreement signals, provided and connected so as to deliver simultaneously
to the purse function (4) a global agreement signal for debiting of an amount for acquiring the document; and
to the acquisition function (7), a global agreement signal for validation of the acquired document.

5. The device according to Claim 4, **characterised in that** it comprises :
connected to the document verification means (10), a means (15) of updating either the document or a copy thereof on reception of the first agreement signal;
a memory (16) for temporary storage of the updated document; and
a location (17) reserved for the updated document, after validation thereof by the reception of the global agreement signal.
